(19) **Europäisches Patentamt / European Patent Office / Office européen des brevets**

(11) **EP 4 568 332 A1**

(12) **EUROPEAN PATENT APPLICATION**
published in accordance with Art. 153(4) EPC

(43) Date of publication:
**11.06.2025 Bulletin 2025/24**

(21) Application number: **22953602.4**

(22) Date of filing: **04.08.2022**

(51) International Patent Classification (IPC):
*H04W 24/10* (2009.01)

(52) Cooperative Patent Classification (CPC):
**H04W 24/10**

(86) International application number:
**PCT/CN2022/110375**

(87) International publication number:
**WO 2024/026793 (08.02.2024 Gazette 2024/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventors:
- **MU, Qin**
  **Beijing 100085 (CN)**
- **LIU, Min**
  **Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **DATA TRANSMISSION METHOD AND APPARATUS, AND DEVICE, STORAGE MEDIUM AND SYSTEM**

(57) A data transmission method and apparatus, and a device, a storage medium and a system, and belong to the technical field of communications. The method comprises: a network device sending a downlink pilot signal to a terminal device (310); the terminal device encoding and compressing, by means of an AI/ML model, downlink information, which is obtained on the basis of downlink pilot signal estimation, so as to obtain codeword information (320); the terminal device determining CSI of a downlink channel, wherein the CSI comprises an RI and/or a CQI (330); the terminal device reporting CSI feedback information to the network device, wherein the CSI feedback information comprises at least one of the codeword information and the CSI (340); and the network device transmitting downlink data on the downlink channel according to the CSI feedback information (350). A reported RI/CQI better matches precoding for data transmission, such that data transmission of a user is accurately and rationally scheduled.

terminal device → network device

310, a downlink pilot signal

320, obtaining codeword information by encoding and compressing, via an AI/ML model, downlink information obtained by estimation based on the downlink pilot signal

330, determining CSI of a downlink channel, in which the CSI includes an RI and/or a CQI

340, CSI feedback information, including at least one of the codeword information or the CSI

350, transmitting downlink data on the downlink channel according to the CSI feedback information

FIG. 3

**Description**

**TECHNICAL FIELD**

The present disclosure relates to the field of communication technology, and more particularly to a method and apparatus for data transmission, a device, a storage medium and a system.

**BACKGROUND**

A channel state information (CSI) reporting refers to a terminal device obtaining a CSI based on a measurement of a downlink pilot signal (such as a channel state information reference signal (CSI-RS)) sent by a network device, and reporting the above CSI to the network device according to a reporting manner and an uplink resource configured by the network device.

In the related art, artificial intelligence (AI)/machine learning (ML) models are introduced into a scenario of the CSI reporting. For example, the terminal device obtains the CSI based on the measurement of the downlink pilot signal, encodes and compresses the CSI via the AI/ML model for encoding to obtain an encoded and compressed CSI, and then quantizes the above encoded and compressed CSI into a binary bit stream and sends the binary bit stream to the network device; and the network device dequantizes the above binary bit stream received, and then inputs dequantized information into the AI/ML model for decoding to decode the dequantized information to obtain a recovered CSI.

At present, the scenario of the CSI reporting that introduces the AI/ML models needs to be further studied.

**SUMMARY**

Embodiments of the present disclosure provide a method and apparatus for data transmission, a device, a storage medium, and a system. The technical solution is as follows.

According to an aspect of the embodiments of the present disclosure, a method for data transmission is provided, which is performed by a terminal device, and includes: receiving a downlink pilot signal sent by a network device; obtaining codeword information by encoding and compressing, via an AI/ML model, downlink information obtained by estimation based on the downlink pilot signal; determining a CSI of a downlink channel, in which the CSI includes a rank indication (RI) and/or a channel quality indication (CQI); and reporting CSI feedback information to the network device, in which the CSI feedback information includes at least one of the codeword information or the CSI.

According to an aspect of the embodiments of the present disclosure, a method for data transmission is provided, which is performed by a network device, and includes: sending a downlink pilot signal to a terminal device; receiving CSI feedback information reported by the terminal device, in which the CSI feedback information includes at least one of codeword information or a CSI of a downlink channel, the codeword information is obtained by the terminal device by encoding and compressing, via an AI/ML model, downlink information obtained by estimation based on the downlink pilot signal, and the CSI includes an RI and/or a CQI; and transmitting downlink data on the downlink channel according to the CSI feedback information.

According to an aspect of the embodiments of the present disclosure, an apparatus for data transmission is provided, which includes: a receiving module configured to receive a downlink pilot signal sent by a network device; a processing module configured to obtain codeword information by encoding and compressing, via an AI/ML model, downlink information obtained by estimation based on the downlink pilot signal; and determine channel state information (CSI) of a downlink channel, in which the CSI includes an RI and/or a CQI; and a sending module configured to report CSI feedback information to the network device, in which the CSI feedback information includes at least one of the codeword information or the CSI.

According to an aspect of the embodiments of the present disclosure, an apparatus for data transmission is provided, which includes: a sending module configured to send a downlink pilot signal to a terminal device; a receiving module configured to receive CSI feedback information reported by the terminal device, in which the CSI feedback information includes at least one of codeword information or a CSI of a downlink channel, the codeword information is obtained by the terminal device by encoding and compressing, via an AI/ML model, downlink information obtained by estimation based on the downlink pilot signal, and the CSI includes an RI and/or a CQI; and a processing module configured to transmit downlink data on the downlink channel according to the CSI feedback information.

According to an aspect of the embodiments of the present disclosure, a terminal device is provided, which includes: a processor; and a memory having stored therein a computer program. The processor executes the computer program to implement the method for data transmission on the above terminal device side.

According to an aspect of the embodiments of the present disclosure, a network device is provided, which includes: a processor; and a memory having stored therein a computer program. The processor executes the computer program to implement the method for data transmission on the above network device side.

According to an aspect of the embodiments of the present disclosure, a computer-readable storage medium is provided, which has stored therein a computer program that, when executed by a processor, causes the method for data transmission on the above terminal device side to be implemented, or causes the method for data transmission on the above network device side to be implement.

According to an aspect of the embodiments of the present disclosure, a communication system is provided, which includes a terminal device and a network device. The terminal device is configured to implement the method for data transmission on the above terminal device side, and the network device is configured to implement the method for data transmission on the above network device side.

According to an aspect of the embodiments of the present disclosure, a chip is provided, which includes a programmable logic circuit and/or program instructions for implementing the method for data transmission on the above terminal device side, or implementing the method for data transmission on the above network device side when the chip is run.

According to an aspect of the embodiments of the present disclosure, a computer program product is provided, which includes computer instructions, and the computer instructions are stored in a computer-readable storage medium. A processor reads and executes the computer instructions from the computer-readable storage medium to implement the method for data transmission on the above terminal device side, or to implement the method for data transmission on the above network device side.

The technical solution according to embodiments of the present disclosure may have the following beneficial effects.

The CSI compression and recovery architecture based on the bilateral AI/ML model of the encoder and the decoder achieves better matching of the RI/CQI reported by the terminal device to the network device with precoding for data transmission, so that the network device may accurately and reasonably schedule the data transmission of the user.

## BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.

FIG. 1 is a schematic diagram of a network architecture according to an illustrative embodiment of the present disclosure.

FIG. 2 is a schematic diagram of a CSI compression and recovery architecture based on a bilateral AI/ML model of an encoder and a decoder according to an illustrative embodiment of the present disclosure.

FIG. 3 is a flow chart of a method for data transmission according to an illustrative embodiment of the present disclosure.

FIG. 4 is a flow chart of a method for data transmission according to another illustrative embodiment of the present disclosure.

FIG. 5 is a flow chart of a method for data transmission according to yet another illustrative embodiment of the present disclosure.

FIG. 6 is a block diagram of an apparatus for data transmission according to an illustrative embodiment of the present disclosure.

FIG. 7 is a block diagram of an apparatus for data transmission according to another illustrative embodiment of the present disclosure.

FIG. 8 is a block diagram of a communication device according to an illustrative embodiment of the present disclosure.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

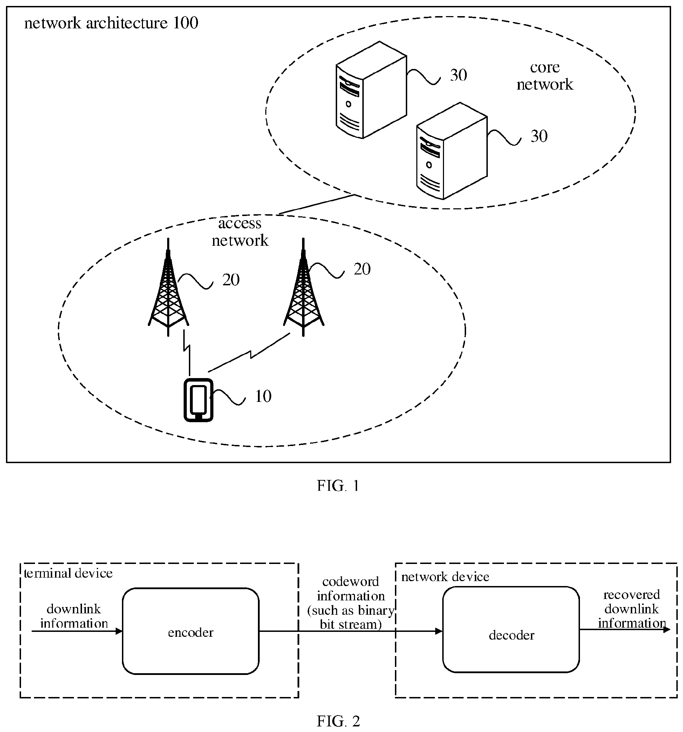

FIG. 1 is a schematic diagram of a network architecture 100 according to an illustrative embodiment of the present disclosure. The network architecture 100 may include: a terminal device 10, an access network device 20 and a core network device 30.

The terminal device 10 may refer to a user equipment (UE), an access terminal, a user unit, a user station, a mobile station, a mobile platform, a remote station, a remote terminal, a mobile device, a wireless communication device, a user agent or a user device. Optionally, the terminal device 10 may also be a cellular phone, a cordless phone, a session initiation protocol (SIP) phone, a wireless local loop (WLL) station, a personal digital assistant (PDA), a handheld device, a computing device or other processing device connected to a wireless modem with a wireless communication function, a vehicle-mounted device, a wearable device, a terminal device in a 5th generation system (5GS) or a terminal device in a future evolved public land mobile network (PLMN), etc., and embodiments of the present disclosure are not limited to this. For the convenience of description, the above-mentioned devices are collectively referred to terminal devices. A plurality of terminal devices 10 are usually provided, and one or more terminal devices 10 may be distributed in a cell managed by each access network device 20. In embodiments of the present disclosure, a "terminal device" and a "UE" are often used interchangeably, but those skilled in the art may understand that the two generally express the same meaning.

The access network device 20 is a device deployed in an access network to provide wireless communication functions for the terminal device 10. The access network device 20 may include various forms of macro base stations, micro base stations, relay stations, access points, etc. In systems using different wireless access technologies, the name of a device with an access network device function may be different, for example, the device is called gNodeB or gNB in a 5G new radio (NR) system. As communication technology evolves, the name "access network device" may change. For the convenience of description, in embodiments of the present disclosure, the above-mentioned devices that provide the wireless communication functions for the terminal device 10 are collectively referred to access network devices. Optionally, a communication relationship may be established between the terminal device 10 and the core network device 30 through the access network device 20. For example, in a long term evolution (LTE) system, the access network device 20 may be an evolved universal terrestrial radio access network (EUTRAN) or one or more eNodeBs in an EUTRAN; and in the 5G NR system, the access network device 20 may be a radio access network (RAN) or one or more gNBs in an RAN. In embodiments of the present disclosure, the "network device" mentioned herein, unless otherwise specified, refers to the access network device 20, such as a base station.

The core network device 30 is a device deployed in a core network. Functions of the core network device 30 are mainly to provide a user connection, a user management and a service bearing, and to provide an interface to an external network as a bearer network. For example, the core network device in the 5G NR system may include devices such as an access and mobility management function (AMF) entity, a user plane function (UPF) entity and a session management function (SMF) entity.

In some embodiments, the access network device 20 and the core network device 30 communicate with each other via a certain radio technology, such as a next generation (NG) interface in the 5G NR system. The access network device 20 and the terminal device 10 communicate with each other via a certain radio technology, such as a universal user to network (Uu) interface.

The "5G NR system" in embodiments of the present disclosure may also be referred to a 5G system or an NR system, but those skilled in the art may understand its meaning. The technical solution described in embodiments of the present disclosure may be applicable to the LTE system, the 5G NR system, a subsequent evolution system of the 5G NR system, and other communication systems such as a narrow band internet of things (NB-IoT) system, and the present disclosure does not limit this.

In an embodiment of the present disclosure, the network device may provide services for a cell, and the terminal device communicates with the network device via transmission resources (for example, a frequency domain resource, or a frequency spectrum resource) on a carrier used by the cell. The cell may be a cell corresponding to the network device (for example, a base station), and the cell may belong to a macro base station or a base station corresponding to a small cell. The small cells here may include: a metro cell, a micro cell, a pico cell, a femto cells, etc. These small cells have features of small coverage and low transmission power, and are suitable for providing high-speed data transmission services.

In the related art, Type I and Type II codebooks exist to implement quantized feedback of a CSI. The CSI feedback overhead based on the Type I codebook is low, but a precoding accuracy calculated based on the codebook is low, which matches a channel poorly, and a data transmission performance is poor. The CSI feedback overhead based on the Type II codebook is large, but a precoding accuracy calculated based on the codebook is high, which matches a channel well, and may improve a data transmission performance. How to reduce a feedback overhead while ensuring a precoding accuracy remains unchanged; or how to obtain a higher precoding accuracy while ensuring a feedback overhead remains unchanged to obtain a better performance-cost trade-off is a problem to be solved.

Due to its powerful computational reasoning capabilities, AI technology has an ability to simulate arbitrary nonlinear functions. It has been widely used in various industries. AI technology and machine learning have also been widely studied and applied in communication systems. In order to solve the above problems to reduce a feedback overhead or improve a CSI feedback accuracy of the terminal device, in the study of the 3rd generation partnership project (3GPP) standardization, a CSI compression and recovery based on a bilateral AI/ML model of an encoder and a decoder is studied. That is, an encoder model is deployed on the terminal device side to compress downlink channel information or a feature vector corresponding to downlink channel information, and a decoder model is deployed on the network device side to restore original channel information or feature vector information, as shown in FIG. 2 below.

In the related art, based on a CSI reporting of the Type I/II codebook, a precoding matrix indication (PMI) is reported together with an RI or a CQI. For the Type II codebook, the RI, the CQI and the PMI are reported in two parts, i.e. Part I and Part II. The RI and the CQI are reported in Part I, and the PMI is reported in Part II. The network device calculates a precoding of a downlink data transmission according to the CSI (including the RI, the CQI and the PMI, etc.) reported by the terminal device, and determines a numeric count of data transmission streams and a encoding and modulation manner.

For a CSI compression and feedback based on the bilateral AI/ML model of the encoder and the decoder, the precoding of the downlink data transmission is determined by the network device according to information recovered by the decoder model. In a case that only the encoder model is deployed on the terminal device but not the decoder model, the terminal device cannot obtain precoding information of the downlink data transmission, and accordingly cannot directly calculate a corresponding RI and/or CQI according to the precoding obtained by the network device. In a case that the terminal device calculates the RI/CQI based on a traditional codebook, or calculates the RI/CQI based on an ideal precoding, this will result in an inconsistency with the RI/CQI calculated by the network device based on a precoding determined by the decoder model, making it impossible for the network device to accurately schedule the downlink data transmission according to the RI/CQI reported by the terminal device.

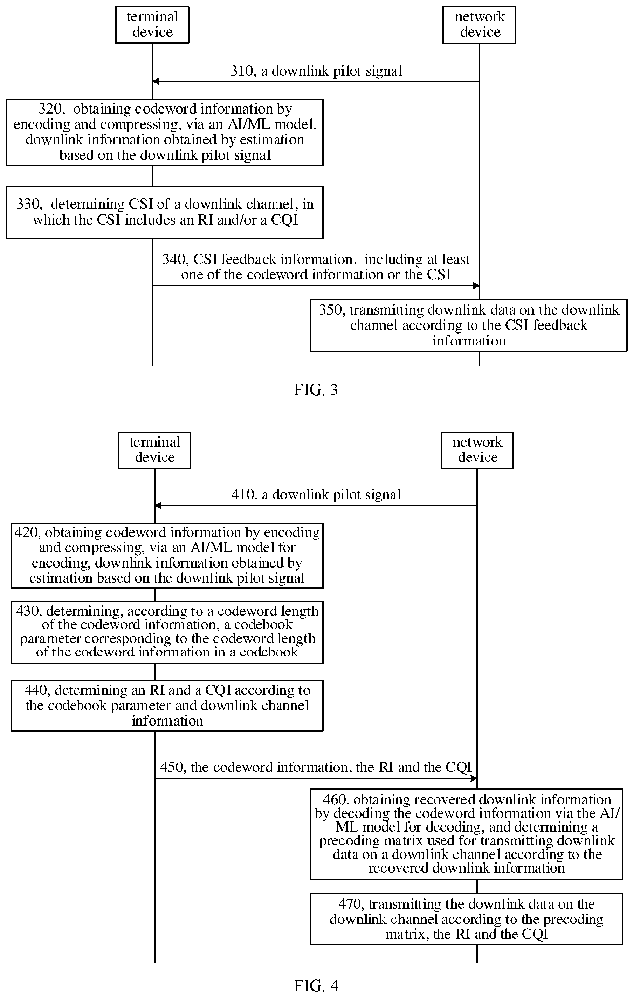

FIG. 3 is a flow chart of a method for data transmission according to an illustrative embodiment of the present disclosure. As an example for illustration, in this embodiment, the method is performed by a network architecture shown in FIG. 1. The method may include at least one of the following steps 310 to 350.

In step 310, a network device sends a downlink pilot signal to a terminal device.

Correspondingly, the terminal device receives the downlink pilot signal sent by the network device. The downlink pilot signal sent is carried in the downlink channel. The downlink pilot signal is a signal used by the terminal device to report a CSI, and is also be called a downlink reference signal. For example, the downlink pilot signal is a channel status information-reference signal (CSI-RS).

In step 320, the terminal device obtains codeword information by encoding and compressing, via an AI/ML model, downlink information obtained by estimation based on the downlink pilot signal.

Under a CSI compression and recovery architecture based on a bilateral AI/ML model of an encoder and a decoder, the AI/ML model for encoding is deployed on the terminal device side, and the AI/ML model for encoding may also be referred to an encoder or an encoding model.

The downlink information includes downlink channel information or a feature vector corresponding to downlink channel information. The feature vector corresponding to the downlink channel information may be extracted from the downlink channel information. The terminal device obtains the downlink channel information by performing a channel measurement and estimation based on a received downlink pilot signal. Optionally, the feature vector corresponding to the downlink channel information is further obtained. The terminal device obtains the codeword information by encoding and compressing, via the AI/ML model for encoding, the above downlink information. The codeword information is a binary sequence consisting of 0 and 1, also called a binary bit stream. The above downlink channel information may also be referred to full channel information.

In some embodiments, a codeword length of the codeword information is configured by the network device. The network device sends first configuration information to the terminal device, and the first configuration information is used to configure a codeword length of the codeword information. For example, the first configuration information includes a codeword length corresponding to at least one rank value respectively. After obtaining the above downlink information, the terminal device generates c codewords according to a codeword length configured by the first configuration information, and obtains the above codeword information after quantizing the c codewords, where c is a positive integer. In some embodiments, the codeword length of the codeword information may also be determined by the terminal device and reported to the network device.

In some embodiments, in a case that input information of the AI/ML model for encoding (that is, the above downlink information input to the model) is the full channel information (that is, the "downlink channel information" described above), c=1. In a case that input information of the AI/ML model for encoding (that is, the above downlink information input to the model) is a feature vector corresponding to the full channel information (that is, the "feature vector corresponding to the downlink channel information" described above), c=1 or v, v represents a numeric count of feature vectors corresponding to the full channel information, and v is a positive integer. For example, in a case that the numeric count of feature vectors corresponding to the full channel information is v=2, the above AI/ML model for encoding may process the 2 feature vectors respectively to generate 2 codewords, and then the codeword information is obtained after quantizing the 2 codewords. Alternatively, the 2 feature vectors may be regarded as a whole, and the AI/ML model for encoding may process the whole to generate 1 codeword, and then the codeword information is obtained after quantizing the 1 codeword.

In addition, a value of the above v may be predefined by negotiation between the terminal device and the network device. For example, a relevant standard or protocol specifies the value of v (for example, specifies that the value of v is 2 by default), and both the terminal device and the network device know the value of v. For example, the value of v may be predefined as a maximum numeric count $v_{max}$ of feature vectors, and $v_{max}$ is a positive integer. Alternatively, a value of the above v may also be determined by the terminal device and reported to the network device via the RI. Alternatively, a value of the above v may also be determined by the network device and sent to the terminal device in advance. Embodiments of the present disclosure are not limited to this.

In step 330, the terminal device determines CSI of a downlink channel, and the CSI includes an RI and/or a CQI.

The above value of v is the rank value.

In a case where the rank value is predefined by negotiation between the terminal device and the network device, it may be understood that the RI is predefined by negotiation between the terminal device and the network device.

When the rank value is determined by the terminal device, the terminal device may use the following manner 1 or manner 2 to determine the RI.

In manner 1, the terminal device determines, according to a codeword length of the codeword information, a codebook parameter corresponding to the codeword length of the codeword information in a codebook, and determines the CSI according to the codebook parameter and the downlink information.

The codeword length of the codeword information is the codeword length of the codeword information obtained in the above step 320, which is denoted by c. The terminal device determines the codebook parameter corresponding to the codeword length of the codeword information in the codebook according to a corresponding relationship between the codeword length of the codeword information and the codebook parameter in the codebook, and then determines the RI according to the codebook parameter and the downlink channel information. In some embodiments, the terminal device determines a PMI according to the codebook parameter, and determines the RI according to the PMI and the downlink channel information.

For example, the above codebook may be a Type I/II codebook, for example, the above codebook is an eType II codebook (eType II CB) or a further enhanced Type II port selection codebook (FeType II PS CB).

For example, the corresponding relationship between the codeword length of the codeword information and the codebook parameter in the codebook is configured by the network device, or is predefined by negotiation between the terminal device and the network device. The network device configures or negotiates to predefine a corresponding relationship (or mapping relationship) of at least one set of a codeword length and a codebook parameter. In a case where the above corresponding relationship is configured by the network device, the network device may send second configuration information to the terminal device, and the second configuration information is used to configure a corresponding relationship between the codeword length of the codeword information and the codebook parameter in the codebook. According to the second configuration information, the terminal device may obtain the corresponding relationship of the at least one set of the codeword length and the codebook parameter.

In some embodiments, the corresponding relationship between the codeword length and the codebook parameter is designed in a following manner. For a set of a codeword length and a codebook parameter corresponding to each other, a first square of general cosine similarity (SGCS) obtained by calculation based on codeword information corresponding to the codeword length and a second SGCS obtained by calculation based on the codebook parameter meet a condition. The first SGCS is an SGCS obtained by calculation according to a precoding matrix determined by recovered downlink information and a feature vector of the downlink channel, the recovered downlink information is obtained by decoding the codeword information corresponding to the codeword length via the AI/ML model for decoding, and the second SGCS is an SGCS obtained by calculation according to a precoding matrix determined by the codebook parameter and the feature vector of the downlink channel. For example, the above condition includes one of: the first SGCS being the same as the second SGCS; or a difference between the first SGCS and the second SGCS being less than or equal to a threshold value. The threshold value may be predefined by negotiation between the terminal device and the network device, or configured by the network device to inform the terminal device. For example, calculation formula of SGCS is:

$$SGCS = E\left\{ \frac{1}{K} \sum_{k=1}^{K} \left( \frac{\|w_k^H \cdot w_k'\|}{\|w_k\| \|w_k'\|} \right)^2 \right\}$$

where K is a numeric count of downlink channels (or sub-bands), $w_k$ represents a feature vector of a k-th downlink channel, $w_k'$ represents a precoding matrix of a k-th downlink channel determined according to the codebook parameter, H represents a conjugate transpose, E represents an averaging/expectation, and $\|\ \|$ represents modulo.

When designing the corresponding relationship between the codeword length and the codebook parameter, a precoding matrix determined according to the recovered downlink information and the feature vector of the downlink channel are used as $w_k'$ and $w_k$ respectively in the above formula, and the first SGCS may be calculated. A precoding matrix determined according to the codebook parameter and the feature vector of the downlink channel are used as $w_k'$

and $w_k$ respectively in the above formula, and the second SGCS may be calculated. In a case that these two SGCS meet the condition, the corresponding relationship of a set of the codeword length and the codebook parameter may be established.

In some embodiments, the codeword length of the codeword information is: a codeword length of an encoded and compressed CSI output by the AI/ML model for encoding. In some embodiments, the codeword length of the codeword information is: a codeword length of a binary bit stream obtained by quantizing an encoded and compressed CSI output by the AI/ML model for encoding.

In some embodiments, the RI may not be determined based on the corresponding relationship between the codeword length and the codebook parameter. As an alternative to the manner 1, a following manner is used to determine the RI of the downlink channel. The terminal device determines at least one feature vector according to the downlink information, and determines the RI by calculating signal interference noise ratios (SINRs) for different rank values according to the at least one feature vector. For example, the terminal device performs a singular value decomposition (SVD) on the downlink channel according to the downlink channel information to obtain the at least one feature vector, and determines the RI by calculating the SINRs for different rank values according to the at least one feature vector. For example, the terminal device performs the SVD on the downlink channel according to the downlink channel information to obtain $r \geq v$ feature vectors, and calculates the SINR at different v values to determine an appropriate v value. For example, a v value with a largest SINR is selected as the RI, or SINRs for v=1, 2,..., $v_{max}$ are calculated in sequence, and in a case that an SINR corresponding to a certain v value meets a condition (such as being greater than or equal to a threshold value, or an increase compared to an SINR corresponding to a previous v value being less than or equal to a threshold value), the v value is used as the RI.

In manner 2, the network device sends a downlink pilot signal formed by v beams to the terminal device after receiving the codeword information reported by the terminal device, and correspondingly, the terminal device receives the downlink pilot signal formed by the v beams sent by the network device. The v beams are v vectors contained in a precoding matrix determined according to recovered downlink information, the recovered downlink information is obtained by decoding the codeword information via the AI/ML model for decoding, and v is a positive integer. The terminal device determines the RI according to effective channel information estimated based on the downlink pilot signal formed by the v beams.

For example, the downlink pilot signal may be a CSI-RS. The effective channel information may be determined according to the downlink channel information and the precoding matrix.

In a case that the manner 2 is used to determine the RI, the network device configures at least two downlink pilot signal resources for the terminal device. One of the downlink pilot signal resources is used to send the downlink pilot signal described in the above step 310, and another of the downlink pilot signal resources is used to send the beamformed downlink pilot signal described here.

For example, numeric counts of ports of the two downlink pilot signal resources may be the same or different. A numeric count of ports of resources corresponding to the beamformed downlink pilot signal is the value of v described above. For example, the above two downlink pilot signal resources may belong to the same resource set or different resource sets.

In addition, the above manner 1 and manner 2 may not only determine the rank value (i.e. determine the RI, and the rank value is reported to the network device via the RI), but also determine a channel quality value of the downlink channel (i.e. determine the CQI, and the channel quality value is reported to the network device via the CQI).

In step 340, the terminal device reports CSI feedback information to the network device, and the CSI feedback information includes at least one of the codeword information or the CSI.

The CSI feedback information is used by the network device to transmit downlink data on the downlink channel. The CSI feedback information includes at least one of the codeword information or the CSI. In some embodiments, the CSI feedback information includes the codeword information and the CSI. In some embodiments, the CSI feedback information includes the codeword information, but does not include the CSI.

In some embodiments, in a case that the terminal device uses the above manner 1 to determine the RI and the CQI, the codeword information, the RI and the CQI may be sent to the network device as the CSI feedback information via one reporting process. In other words, the terminal device reports the codeword information, the RI and the CQI at the same time.

In some embodiments, in a case that the terminal device uses the above manner 2 to determine the RI and the CQI, the codeword information is sent to the network device as the CSI feedback information via one reporting process, and the RI and the CQI are sent to the network device as the CSI feedback information via another reporting process. That is, the terminal device first determines the codeword information based on a first occurred downlink pilot signal, and reports the codeword information to the network device. The network device recovers v feature vectors based on the codeword information, and sends the downlink pilot signal formed by the v beams to the terminal device. The terminal device determines the RI and the CQI according to the effective channel information estimated based on the downlink pilot signal formed by the v beams, and reports the RI and the CQI to the network device.

In some embodiments, the codeword information and the RI are sent to the network device as the CSI feedback information via one reporting process, and the CQI is sent to the network device as the CSI feedback information via another reporting process. In this manner, the RI may be determined using the manner 1, and the CQI may be determined using the manner 1 or the manner 2.

In some embodiments, in a case that the RI is predefined by negotiation between the terminal device and the network device, the RI may not need to be reported. In a case that the terminal device determines the CQI using the above manner 1, the codeword information and the CQI are sent to the network device as the CSI feedback information via one reporting process. In a case that the terminal device determines the CQI using the above manner 2, the codeword information is sent to the network device as the CSI feedback information via one reporting process, and the CQI is sent to the network device as the CSI feedback information via another reporting process.

In some embodiments, in a case that the terminal device does not report the CSI, the codeword information is reported to the network device as the CSI feedback information. In this case, optionally, the CSI feedback information further includes interference information, and the interference information includes at least one of: interference information between cells or interference information between terminals. The codeword information and the interference information may be sent to the network device as the CSI feedback information via one single reporting process; or the codeword information is sent to the network device as the CSI feedback information via one single reporting process, and the interference information is sent to the network device as the CSI feedback information via another reporting process, and the present disclosure does not limit a sequence in which the codeword information and the interference information are sent. In addition, in a case that the terminal device does not report the CSI, the terminal device may not need to perform the above relevant steps for determining the CSI.

In some embodiments, the codeword information is reported to the network device in a broadband manner.

In some embodiments, the RI is reported to the network device in the broadband manner.

In some embodiments, the CQI is reported to the network device in the wideband manner or a sub-band manner.

In step 350, the network device transmits downlink data on the downlink channel according to the CSI feedback information.

In some embodiments, the network device obtains recovered downlink information by decoding the codeword information via the AI/ML model for decoding, determines a precoding matrix used for transmitting the downlink data on the downlink channel according to the recovered downlink information, and transmits the downlink data on the downlink channel according to the precoding matrix, the RI and the CQI. For example, the network device determines a numeric count of streams and a modulation level of a downlink data transmission according to the RI and the CQI, and then determines a precoding of the downlink data transmission using the full channel information or the v feature vectors recovered by the decoder.

The above recovered downlink information may be recovered downlink channel information (or recovered full channel information), or may be a feature vector corresponding to recovered downlink channel information. It should be noted that the recovered downlink information may not be the same as the above downlink information used as the input of the encoder model, because quantization and dequantization processes as well as encoding and decoding processes may result in data being unable to be recovered exactly the same.

In some embodiments, in a case that the CSI feedback information does not include the CSI, the network device may obtain the recovered downlink information by decoding the codeword information via the AI/ML model for decoding, determine the precoding matrix, the RI and the CQI used for transmitting the downlink data on the downlink channel according to the recovered downlink information, and transmit the downlink data on the downlink channel according to the precoding matrix, the RI and the CQI. Optionally, the network device determines the precoding matrix, the RI and the CQI used for transmitting the downlink data on the downlink channel according to the recovered downlink information and the interference information reported by the terminal device. For this manner, a method is provided for the network device to determine the precoding matrix, the RI and the CQI of the downlink transmission according to the codeword information and the interference information reported by the terminal device. This method also takes into account information such as a channel interference, enabling the network device to accurately and reasonably schedule the data transmission of the user.

In the technical solution provided in embodiments of the present disclosure, the CSI compression and recovery architecture based on the bilateral AI/ML model of the encoder and the decoder achieves better matching of the RI/CQI reported by the terminal device to the network device with the precoding for the data transmission, so that the network device may accurately and reasonably schedule the data transmission of the user.

In addition, embodiments of the present disclosure provide two manners for the terminal device to determine the RI/CQI. In a case that the manner 1 is used to determine the RI/CQI, the network device only needs to send the downlink pilot signal at one time, and the RI/CQI may be reported to the network device together with the codeword information, and the entire signaling interaction process is relatively simple. In a case that the manner 2 is used to determine the RI/CQI, the RI/CQI and the codeword information are reported to the network device at two times. The manner 2 does not require an advance configuration or a predefinition of the corresponding relationship between the codeword length and the codebook parameter, and is more flexible to implement. Moreover, regardless of the above manner 1 or manner 2, the RI/CQI reported by the terminal device to the network device may be better matched with the precoding matrix determined by the downlink information recovered by the decoder model, so that the network device may accurately and reasonably schedule the data transmission of the user.

FIG. 4 is a flow chart of a method for data transmission according to another illustrative embodiment of the present disclosure. As an example for illustration, in this embodiment, the method is performed by a network architecture shown in FIG. 1. The method may include at least one of the following steps 410 to 470.

In step 410, a network device sends a downlink pilot signal to a terminal device.

In step 420, the terminal device obtains codeword information by encoding and compressing, via an AI/ML model for encoding, downlink information obtained by estimation based on the downlink pilot signal.

In step 430, the terminal device determines, according to a codeword length of the codeword information, a codebook parameter corresponding to the codeword length of the codeword information in a codebook.

In step 440, the terminal device determines an RI and a CQI according to the codebook parameter and downlink channel information.

In step 450, the terminal device reports the codeword information, the RI and the CQI to the network device.

In step 460, the network device obtains recovered downlink information by decoding the codeword information via the AI/ML model for decoding, and determines a precoding matrix used for transmitting downlink data on a downlink channel according to the recovered downlink information.

In step 470, the network device transmits the downlink data on the downlink channel according to the precoding matrix, the RI and the CQI.

For example, as an example for illustration, the codebook is eType II CB, there are the 8 codebook parameters configurable in eType II CB, as shown in the following Table 1. Each configuration represents a feedback cost at different ranks. Each configuration corresponds to a corresponding performance or an SGCS value.

Table 1: 8 codebook parameter configurations for eType II CB

| *paramCombination-r16* | $L$ | $p_\upsilon$ | | $\beta$ |
|:---:|:---:|:---:|:---:|:---:|
| | | $\upsilon \in \{1,2\}$ | $\upsilon \in \{3,4\}$ | |
| 1 | 2 | ¼ | 1/8 | ¼ |
| 2 | 2 | ¼ | 1/8 | ½ |
| 3 | 4 | ¼ | 1/8 | ¼ |
| 4 | 4 | ¼ | 1/8 | ½ |
| 5 | 4 | ¼ | ¼ | ¾ |
| 6 | 4 | ½ | ¼ | ½ |
| 7 | 6 | ¼ | - | ½ |
| 8 | 6 | ¼ | - | ¾ |

In Table *1, paramCombination-r16* represents 8 codebook parameter configurations for the eType II CB; L represents a numeric count of spatial-level vectors, i.e., a numeric count of beams; $p_v$ represents a numeric count of frequency-level vectors; v represents a rank of the codebook; and $\beta$ is used to determine a numeric count of non-zero coefficients in a combination coefficient matrix.

In a case that a model based on an encoder is used to implement a CSI compression feedback, the network device may configure 8 different codeword lengths (referred to as "code lengths") at different ranks. Each codeword length quantized is used as an input of the decoder model, so that an SGCS obtained from an output of the decoder and a feature vector of the downlink channel is the same as an SGCS obtained by calculation by a codebook parameter configuration of the eType II CB, or a difference between the two is less than or equal to a threshold value. In this way, different codeword lengths correspond to different codebook parameters, and a one-to-one corresponding relationship is established between the two.

It is assumed that the network device configures the terminal device with an information length (that is, a length of the above codeword information) of 40 bits, obtained after quantizing a code length at rank = 1, and the codebook parameter configuration corresponding to the code length is a second element, that is, a parameter configuration corresponding to *paramCombination-r16* being 2 as shown in Table 1.

The network device sends the downlink pilot signal (such as a CSI-RS) to the terminal device. The terminal device estimates the downlink channel information according to a received CSI-RS, and calculates a PMI based on a parameter configuration in a case that *paramCombination-r16* is 2 in a Rel-16 Type II codebook. Based on the PMI and estimated downlink channel information, RI and CQI values are calculated. Afterwards, the terminal device reports the RI, the CQI and codeword information encoded and compressed by the encoder to the network device. The RI and the codeword information are reported in a wideband manner, while the CQI may be reported in a wideband manner or a sub-band manner. The network device determines a precoding matrix for a downlink data transmission according to output information inferred by the decoder, that is, v feature vectors, and then implements a scheduling transmission of the downlink data in combination with the received RI and CQI.

In this embodiment, it is described that the terminal device uses the above manner 1 to determine the RI and the CQI. This method only requires the network device to send the downlink pilot signal at one time, and the RI/CQI may be reported to the network device together with the codeword information. The entire signaling interaction process is relatively simple.

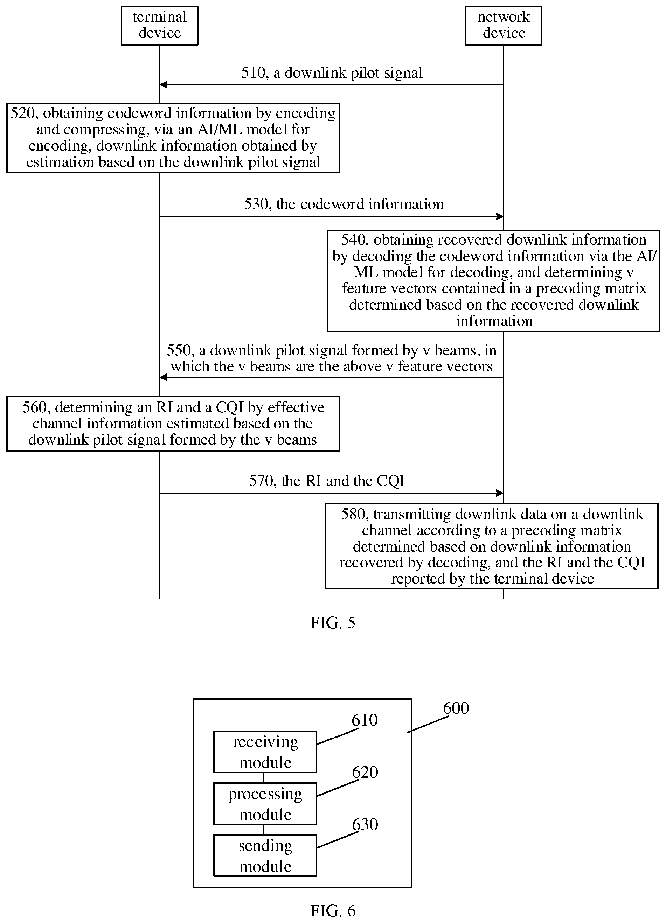

FIG. 5 is a flow chart of a method for data transmission according to another illustrative embodiment of the present disclosure. As an example for illustration, in this embodiment, the method is performed by a network architecture shown in FIG. 1. The method may include at least one of the following steps 510 to 580.

In step 510, a network device sends a downlink pilot signal to a terminal device.

In step 520, the terminal device obtains codeword information by encoding and compressing, via an AI/ML model for encoding, downlink information obtained by estimation based on the downlink pilot signal.

In step 530, the terminal device reports the codeword information to the network device.

In step 540, the network device obtains recovered downlink information by decoding the codeword information via the AI/ML model for decoding, and determines v feature vectors contained in a precoding matrix determined based on the recovered downlink information.

In step 550, the network device sends a downlink pilot signal formed by v beams to the terminal device, and the v beams are the above v feature vectors.

In step 560, the terminal device determines an RI and a CQI according to effective channel information estimated based on the downlink pilot signal formed by the v beams.

In step 570, the terminal device reports the RI and the CQI to the network device.

In step 580, the network device transmits downlink data on a downlink channel according to a precoding matrix determined based on downlink information recovered by decoding, and the RI and the CQI reported by the terminal device.

It is assumed that a maximum numeric count of streams for a downlink data transmission is 4, that is, $v_{max} = 4$. As shown in FIG. 5, the network device sends the downlink pilot signal (such as the CSI-RS) to the terminal device for a downlink channel information estimation. The terminal device calculates, according to estimated downlink channel information, $v_{max} = 4$ feature vectors corresponding to the downlink channel information. The 4 feature vectors are as an input of the encoder model, which obtains c=4 pieces of corresponding codeword information, and the terminal device quantizes these codeword information and reports them to the network device. The network device dequantizes received quantized codeword information, and infers 4 feature vectors from a dequantization result via the decoder model and represents them as **B1, B2, B3** and **B4.**

The network device then sends the beamformed downlink pilot signal (such as the CSI-RS) to the terminal device. A numeric count of ports of CSI-RS resources is 4, each port corresponds to one beam, and there are 4 port beams of the CSI-RS resources, namely **B1, B2, B3** and **B4.** The terminal device estimates downlink effective channel information according to the received beamformed CSI-RS, calculates rank=2 corresponding to a current channel and a broadband and/or sub-band CQI corresponding to rank=2, and a value of rank=2 is indicated by the RI. The terminal device reports the RI and the CQI to the network device, and the network device uses a feature vector of rank=2 inferred by the decoder as a precoding matrix for a downlink data transmission, and uses the RI, the CQI and the precoding matrix to implement a scheduling transmission of the downlink data.

In this embodiment, it is described that the terminal device uses the above manner 2 to determine the RI and the CQI, and the RI/CQI and the codeword information are reported to the network device at two times. The manner 2 does not require an advance configuration or a predefinition of the corresponding relationship between the codeword length and the codebook parameter, and is more flexible to implement.

It should be noted that the above relevant steps executed by the terminal device may be independently implemented as a method for data transmission on the terminal device side; the above relevant steps executed by the network device may be independently implemented as a method for data transmission on the network device side.

The following are apparatus embodiments of the present disclosure, which may be used to execute the method embodiments of the present disclosure. For details not disclosed in the apparatus embodiments of the present disclosure, reference may be made to the method embodiments of the present disclosure.

FIG. 6 is a block diagram of an apparatus for data transmission according to an illustrative embodiment of the present disclosure. The apparatus has the function of implementing the method examples on the above terminal device side, and the function may be implemented by hardware or by executing corresponding software through hardware. The apparatus may be the terminal device introduced above, or may be arranged in the terminal device. As shown in FIG. 6, the apparatus 600 may include: a receiving module 610, a processing module 620 and a sending module 630.

The receiving module 610 is configured to receive a downlink pilot signal sent by a network device.

The processing module 620 is configured to obtain codeword information by encoding and compressing, via an AI/ML model, downlink information obtained by estimation based on the downlink pilot signal; and determine channel state information (CSI) of a downlink channel, and the CSI includes an RI and/or a CQI.

The sending module 630 is configured to report CSI feedback information to the network device, and the CSI feedback information includes at least one of the codeword information or the CSI.

In some embodiments, the processing module 620 is configured to: determine, according to a codeword length of the codeword information, a codebook parameter corresponding to the codeword length of the codeword information in a codebook; and determine the CSI according to the codebook parameter and the downlink information.

In some embodiments, the processing module 620 is configured to: determine a PMI according to the codebook parameter; and determine the CSI according to the PMI and the downlink information.

In some embodiments, the codeword length of the codeword information is configured by the network device, or is determined by the terminal device and reported to the network device.

In some embodiments, a corresponding relationship between the codeword length of the codeword information and the codebook parameter in the codebook is configured by the network device, or is predefined by negotiation between the terminal device and the network device.

In some embodiments, for a set of a codeword length and a codebook parameter corresponding to each other, a first SGCS obtained by calculation based on codeword information corresponding to the codeword length and a second SGCS obtained by calculation based on the codebook parameter meet a condition. The first SGCS is an SGCS obtained by calculation according to a precoding matrix determined by recovered downlink information and a feature vector of the downlink channel, the recovered downlink information is obtained by decoding the codeword information corresponding to the codeword length via an AI/ML model for decoding, and the second SGCS is an SGCS obtained by calculation according to a precoding matrix determined by the codebook parameter and the feature vector of the downlink channel. The condition includes one of: the first SGCS being the same as the second SGCS; or a difference between the first SGCS and the second SGCS being less than or equal to a threshold value.

In some embodiments, the codeword length of the codeword information is: a codeword length of an encoded and compressed CSI output by the AI/ML model for encoding; or a codeword length of a binary bit stream obtained by quantizing an encoded and compressed CSI output by the AI/ML model for encoding.

In some embodiments, the processing module 620 is configured to: determine at least one feature vector according to the downlink information; and determine the RI by calculating SINRs for different rank values according to the at least one feature vector.

In some embodiments, the processing module 620 is configured to: receive a downlink pilot signal formed by v beams sent by the network device, in which the v beams are v vectors contained in a precoding matrix determined according to recovered downlink information, the recovered downlink information is obtained by decoding the codeword information via an AI/ML model for decoding, and v is a positive integer; and determine the CSI according to effective channel information estimated based on the downlink pilot signal formed by the v beams.

In some embodiments, the network device configures at least two downlink pilot signal resources for the terminal device.

In some embodiments, numeric counts of ports of the two downlink pilot signal resources are the same or different; and/or the two downlink pilot signal resources belong to the same resource set or different resource sets.

In some embodiments, the codeword information, the RI and the CQI are sent to the network device as the CSI feedback information via one reporting process; or the codeword information is sent to the network device as the CSI feedback information via one reporting process, and the RI and the CQI are sent to the network device as the CSI feedback information via another reporting process; or the codeword information and the RI are sent to the network device as the CSI feedback information via one reporting process, and the CQI is sent to the network device as the CSI feedback information via another reporting process; or the codeword information and the CQI are sent to the network device as the CSI feedback information via one reporting process; or the codeword information is sent to the network device as the CSI feedback information via one reporting process, and the CQI is sent to the network device as the CSI feedback information via another reporting process; or the codeword information is reported to the network device as the CSI feedback information, and the CSI feedback information further includes interference information, and the interference information includes at least one of: interference information between cells or interference information between terminals.

In some embodiments, the downlink pilot signal is a CSI-RS.

In some embodiments, the codeword information is reported to the network device in a broadband manner.

In some embodiments, the RI is reported to the network device in the broadband manner, and the CQI is reported to the network device in the broadband manner or a sub-band manner.

In some embodiments, the RI is predefined by negotiation between the terminal device and the network device.

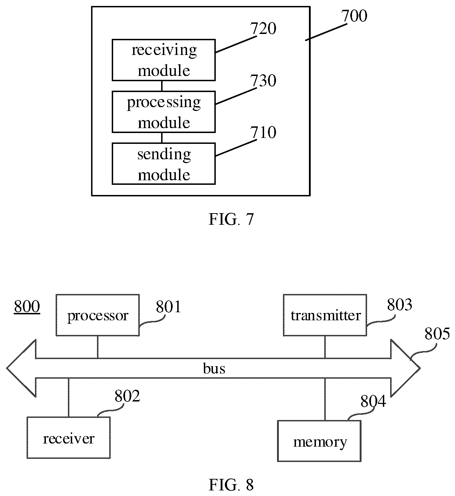

FIG. 7 is a block diagram of an apparatus for data transmission according to another illustrative embodiment of the present disclosure. The apparatus has the function of implementing the method examples on the above network device side, and the function may be implemented by hardware or by executing corresponding software through hardware. The apparatus may be the network device introduced above, or may be arranged in the network device. As shown in FIG. 7, the apparatus 700 may include: a sending module 710, a receiving module 720 and a processing module 730.

The sending module 710 is configured to send a downlink pilot signal to a terminal device.

The receiving module 720 is configured to receive CSI feedback information reported by the terminal device. The CSI feedback information includes at least one of codeword information or a CSI of a downlink channel, the codeword information is obtained by the terminal device by encoding and compressing, via an AI/ML model, downlink information obtained by estimation based on the downlink pilot signal, and the CSI includes an RI and/or a CQI.

The processing module 730 is configured to transmit downlink data on the downlink channel according to the CSI feedback information.

In some embodiments, the processing module 730 is configured to: obtain recovered downlink information by decoding the codeword information via the AI/ML model for decoding; determine a precoding matrix used for transmitting the downlink data on the downlink channel according to the recovered downlink information; and transmit the downlink data on the downlink channel according to the precoding matrix and the CSI.

In some embodiments, the sending module 710 is further configured to: send first configuration information and/or second configuration information to the terminal device. The first configuration information is used to configure a codeword length of the codeword information, and the second configuration information is used to configure a corresponding relationship between the codeword length of the codeword information and a codebook parameter in a codebook. The second configuration information is used by the terminal device to determine a codebook parameter corresponding to the codeword length of the codeword information in the codebook, and to determine the CSI according to the codebook parameter.

In some embodiments, for a set of a codeword length and a codebook parameter corresponding to each other, a first SGCS obtained by calculation based on codeword information corresponding to the codeword length and a second SGCS obtained by calculation based on the codebook parameter meet a condition. The first SGCS is an SGCS obtained by calculation according to a precoding matrix determined by recovered downlink information and a feature vector of the downlink channel, the recovered downlink information is obtained by decoding the codeword information corresponding to the codeword length via the AI/ML model for decoding, and the second SGCS is an SGCS obtained by calculation according to a precoding matrix determined by the codebook parameter and the feature vector of the downlink channel. The condition includes one of: the first SGCS being the same as the second SGCS; or a difference between the first SGCS and the second SGCS being less than or equal to a threshold value.

In some embodiments, the codeword length of the codeword information is: a codeword length of an encoded and compressed CSI output by an AI/ML model for encoding; or a codeword length of a binary bit stream obtained by quantizing an encoded and compressed CSI output by an AI/ML model for encoding.

In some embodiments, the sending module 710 is further configured to: send a downlink pilot signal formed by v beams to the terminal device after receiving the codeword information reported by the terminal device, in which the v beams are v vectors contained in a precoding matrix determined according to recovered downlink information, the recovered downlink information is obtained by decoding the codeword information via the AI/ML model for decoding, and v is a positive integer; and determine the CSI by the terminal device according to effective channel information estimated based on the downlink pilot signal formed by the v beams.

In some embodiments, the network device configures at least two downlink pilot signal resources for the terminal device.

In some embodiments, numeric counts of ports of the two downlink pilot signal resources are the same or different; and/or the two downlink pilot signal resources belong to the same resource set or different resource sets.

In some embodiments, the codeword information, the RI and the CQI are sent to the network device as the CSI feedback information via one reporting process; or the codeword information is sent to the network device as the CSI feedback information via one reporting process, and the RI and the CQI are sent to the network device as the CSI feedback information via another reporting process; or the codeword information and the RI are sent to the network device as the CSI feedback information via one reporting process, and the CQI is sent to the network device as the CSI feedback information via another reporting process; or the codeword information and the CQI are sent to the network device as the CSI feedback information via one reporting process; or the codeword information is sent to the network device as the CSI feedback information via one reporting process, and the CQI is sent to the network device as the CSI feedback information via another reporting process; or the codeword information is reported to the network device as the CSI feedback information, and the CSI feedback information further includes interference information, and the interference information includes at least one of: interference information between cells or interference information between terminals.

In some embodiments, the downlink pilot signal is a CSI-RS.

In some embodiments, the codeword information is reported to the network device in a broadband manner.

In some embodiments, the RI is reported to the network device in the broadband manner, and the CQI is reported to the network device in the broadband manner or a sub-band manner.

In some embodiments, the RI is predefined by negotiation between the terminal device and the network device.

It should be noted that when realizing functions of the apparatus according to the above embodiments, an example for describing the individual modules classified by function is given. In actual applications, the above functions may be assigned to different functional modules according to actual needs, that is, a content structure of the apparatus may be divided into different functional modules to complete all or some of the functions described above.

With respect to the apparatuses in the above embodiments, the specific manners for performing operations for individual modules therein have been described in detail in the embodiments regarding the methods, and will not be elaborated here. For details not described in detail in the apparatus embodiments, reference may be made to the above method embodiments.

FIG. 8 is a block diagram of a communication device 800 according to an illustrative embodiment. The communication device 800 may be the aforementioned terminal device or network device. The communication device 800 may include: a processor 801, a receiver 802, a transmitter 803, a memory 804 and a bus 805. The processor 801 may be used to implement the function of the processing module in the above apparatus embodiments, the receiver 802 may be used to implement the function of the receiving module in the above apparatus embodiments, and the transmitter 803 may be used to implement the function of the sending module in the above apparatus embodiments.

The processor 801 includes one or more processing cores. The processor 801 executes various functional applications and information processing by running software programs and modules.

The receiver 802 and the transmitter 803 may be implemented as a communication component, and the communication component may be a communication chip.

The memory 804 is connected to the processor 801 via the bus 805.

The memory 804 may be used to store a computer program, and the processor 801 is used to execute the computer program to implement the method for data transmission on the above terminal device side, or the method for data transmission on the above network device side.

In addition, the memory 804 may be implemented using any type of volatile or nonvolatile storage devices, or a combination thereof, including, but not limited to, a magnetic disk or an optical disk, an electrically erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

An embodiment of the present disclosure further provides a computer-readable storage medium, which has stored therein a computer program. The computer program is used to be executed by a processor to implement the method for data transmission on the above terminal device side, or the method for data transmission on the above network device side. Optionally, the computer-readable storage medium may include: a read-only memory (ROM), a random-access memory (RAM), solid state drives (SSD) or an optical disk, etc. A random access memory may include a resistance random access memory (ReRAM) and a dynamic random access memory (DRAM).

An embodiment of the present disclosure further provides a communication system, which includes a terminal device and a network device. The terminal device is used to implement the method for data transmission on the above terminal device side, and the network device is configured to implement the method for data transmission on the above network device side.

An embodiment of the present disclosure further provides a chip, which includes a programmable logic circuit and/or program instructions for implementing, when the chip is run, the method for data transmission on the above terminal device side, or the method for data transmission on the above network device side.

An embodiment of the present disclosure further provides a computer program product, which includes computer instructions stored in a computer-readable storage medium. A processor reads and executes the computer instructions from the computer-readable storage medium to implement the method for data transmission on the above terminal device side, or the method for data transmission on the above network device side.

It should be understood that the "indicate" mentioned in embodiments of the present disclosure may be a direct indication, may be an indirect indication, or may be an indication of an association relationship. For example, A indicates B, which may represent A directly indicates B, for example, B may be obtained through A; may also represent A indirectly indicates B, for example, A indicates C, and B may be obtained through C; may also represent an association relationship between A and B.

In the description of embodiments of the present disclosure, the term "corresponding" may represent a direct or indirect corresponding relationship between two items, or an association relationship between two items, or a relationship of indication and being indicated, configuration and being configured, and the like.

In some embodiments of the present disclosure, "predefined" may be implemented by pre-saving corresponding codes, tables or other manners that may be used to indicate relevant information in devices (for example, including terminal devices and network devices), and the present disclosure does not limit its specific implementation. For example, the predefined may refer to that defined in a protocol.

In some embodiments of the present disclosure, the "protocol" may refer to a standard protocol in the communication field, for example, it may include an LTE protocol, an NR protocol, and relevant protocols used in future communication systems, which is not limited in the present disclosure.

The term "plurality of" mentioned herein refers to two or more. Term "and/or" describes an association relationship of associated objects, means that there may be three relationships. For example, A and/or B may mean that A exists alone, A and B exist at the same time, and B exists alone. A character "/" generally indicates that contextual associated objects are in an "or" relationship.

The term "greater than or equal to" mentioned herein may refer to greater than and equal to, or greater than, and the term "less than or equal to" may refer to less than and equal to, or less than.

In addition, step numbers described herein only illustrate one possible execution sequence between the steps. In some other embodiments, the above steps may not be executed in the sequence of numbers, such as two steps with different numbers are executed at the same time, or two steps with different numbers are executed in an opposite sequence as illustrative. Embodiments of the present disclosure are not limited to this.

In addition, the various embodiments according to the present disclosure may be arbitrarily combined to form new embodiments, which are all within the protection scope of the present disclosure.

Those skilled in the art should be aware that, in one or more of the above examples, the functions described in embodiments of the present disclosure may be implemented by hardware, software, firmware or any combination thereof. When implemented using software, the functions may be stored in a computer-readable medium or transmitted as one or more instructions or codes on a computer-readable medium. The computer-readable medium includes a computer storage medium and a communication medium, and the communication medium includes any medium that facilitates transfer of a computer program from one place to another. A storage medium may be any available medium that may be accessed by a general purpose or special purpose computer.

The above descriptions are only illustrative embodiments of the present disclosure and are not intended to limit the present disclosure. Any modifications, equivalent substitutions, improvements, etc. made within the spirit and principle of the present disclosure shall be included in the protection scope of the present disclosure.

**Claims**

1. A method for data transmission, performed by a terminal device, comprising:

   receiving a downlink pilot signal sent by a network device;
   obtaining codeword information by encoding and compressing, via an artificial intelligence/machine learning (AI/ML) model, downlink information obtained by estimation based on the downlink pilot signal;
   determining channel state information (CSI) of a downlink channel, wherein the CSI comprises a rank indication (RI) and/or a channel quality indication (CQI); and
   reporting CSI feedback information to the network device, wherein the CSI feedback information comprises at least one of the codeword information or the CSI.

2. The method according to claim 1, wherein determining the CSI of the downlink channel comprises:

   determining, according to a codeword length of the codeword information, a codebook parameter corresponding to the codeword length of the codeword information in a codebook; and
   determining the CSI according to the codebook parameter and the downlink information.

3. The method according to claim 2, wherein determining the CSI according to the codebook parameter and the downlink information comprises:

   determining a precoding matrix indication (PMI) according to the codebook parameter; and
   determining the CSI according to the PMI and the downlink information.

4. The method according to claim 2 or 3, wherein for a set of a codeword length and a codebook parameter corresponding to each other, a first square of general cosine similarity (SGCS) obtained by calculation based on codeword information corresponding to the codeword length and a second SGCS obtained by calculation based on the codebook parameter meet a condition;

   wherein the first SGCS is an SGCS obtained by calculation according to a precoding matrix determined by recovered downlink information and a feature vector of the downlink channel, the recovered downlink information is obtained by decoding the codeword information corresponding to the codeword length via an AI/ML model for decoding, and the second SGCS is an SGCS obtained by calculation according to a precoding matrix determined by the codebook parameter and the feature vector of the downlink channel; and

the condition comprises one of:

the first SGCS being the same as the second SGCS; or
a difference between the first SGCS and the second SGCS being less than or equal to a threshold value.

5. The method according to any one of claims 2 to 4, wherein the codeword length of the codeword information is:

a codeword length of an encoded and compressed CSI output by the AI/ML model for encoding; or
a codeword length of a binary bit stream obtained by quantizing an encoded and compressed CSI output by the AI/ML model for encoding.

6. The method according to claim 1, wherein determining the CSI of the downlink channel comprises:

determining at least one feature vector according to the downlink information; and
determining the RI by calculating signal interference noise ratios (SINRs) for different rank values according to the at least one feature vector.

7. The method according to claim 1, wherein determining the CSI of the downlink channel comprises:

receiving a downlink pilot signal formed by v beams sent by the network device, wherein the v beams are v vectors contained in a precoding matrix determined according to recovered downlink information, the recovered downlink information is obtained by decoding the codeword information via an AI/ML model for decoding, and v is a positive integer; and
determining the CSI according to effective channel information estimated based on the downlink pilot signal formed by the v beams.

8. The method according to claim 7, wherein the network device configures at least two downlink pilot signal resources for the terminal device.

9. The method according to claim 1, wherein

the codeword information, the RI and the CQI are sent to the network device as the CSI feedback information via one reporting process; or
the codeword information is sent to the network device as the CSI feedback information via one reporting process, and the RI and the CQI are sent to the network device as the CSI feedback information via another reporting process; or
the codeword information and the RI are sent to the network device as the CSI feedback information via one reporting process, and the CQI is sent to the network device as the CSI feedback information via another reporting process; or
the codeword information and the CQI are sent to the network device as the CSI feedback information via one reporting process; or
the codeword information is sent to the network device as the CSI feedback information via one reporting process, and the CQI is sent to the network device as the CSI feedback information via another reporting process; or
the codeword information is reported to the network device as the CSI feedback information, and the CSI feedback information further comprises at least one of interference information between cells or interference information between terminals.

10. The method according to any one of claims 1 to 9, wherein the downlink pilot signal is a channel state information reference signal (CSI-RS).

11. The method according to any one of claims 1 to 10, wherein the codeword information is reported to the network device in a broadband manner.

12. The method according to any one of claims 1 to 11, wherein the RI is reported to the network device in the broadband manner, and the CQI is reported to the network device in the broadband manner or a sub-band manner.

13. A method for data transmission, performed by a network device, comprising:

sending a downlink pilot signal to a terminal device;
receiving channel state information (CSI) feedback information reported by the terminal device, wherein the CSI feedback information comprises at least one of codeword information or a CSI of a downlink channel, the codeword information is obtained by the terminal device by encoding and compressing, via an artificial intelligence/machine learning (AI/ML) model, downlink information obtained by estimation based on the downlink pilot signal, and the CSI comprises a rank indication (RI) and/or a channel quality indication (CQI); and
transmitting downlink data on the downlink channel according to the CSI feedback information.

14. The method according to claim 13, wherein transmitting the downlink data on the downlink channel according to the CSI feedback information comprises:

obtaining recovered downlink information by decoding the codeword information via the AI/ML model for decoding;
determining a precoding matrix used for transmitting the downlink data on the downlink channel according to the recovered downlink information; and
transmitting the downlink data on the downlink channel according to the precoding matrix and the CSI.

15. The method according to claim 13 or 14, further comprising:

sending first configuration information and/or second configuration information to the terminal device, wherein the first configuration information is used to configure a codeword length of the codeword information, and the second configuration information is used to configure a corresponding relationship between the codeword length of the codeword information and a codebook parameter in a codebook;
wherein the second configuration information is used by the terminal device to determine a codebook parameter corresponding to the codeword length of the codeword information in the codebook, and to determine the CSI according to the codebook parameter.

16. The method according to claim 15, wherein for a set of the codeword length and the codebook parameter corresponding to each other, a first square of general cosine similarity (SGCS) obtained by calculation based on codeword information corresponding to the codeword length and a second SGCS obtained by calculation based on the codebook parameter meet a condition;

wherein the first SGCS is an SGCS obtained by calculation according to a precoding matrix determined by recovered downlink information and a feature vector of the downlink channel, the recovered downlink information is obtained by decoding the codeword information corresponding to the codeword length via the AI/ML model for decoding, and the second SGCS is an SGCS obtained by calculation according to a precoding matrix determined by the codebook parameter and the feature vector of the downlink channel; and
the condition comprises one of:

the first SGCS being the same as the second SGCS; or
a difference between the first SGCS and the second SGCS being less than or equal to a threshold value.

17. The method according to claim 15 or 16, wherein the codeword length of the codeword information is:

a codeword length of an encoded and compressed CSI output by an AI/ML model for encoding; or
a codeword length of a binary bit stream obtained by quantizing an encoded and compressed CSI output by an AI/ML model for encoding.

18. The method according to claim 13 or 14, further comprising:

sending a downlink pilot signal formed by v beams to the terminal device after receiving the codeword information reported by the terminal device, wherein the v beams are v vectors contained in a precoding matrix determined according to recovered downlink information, the recovered downlink information is obtained by decoding the codeword information via the AI/ML model for decoding, and v is a positive integer; and
determining the CSI by the terminal device according to effective channel information estimated based on the downlink pilot signal formed by the v beams.

19. The method according to claim 18, wherein the network device configures at least two downlink pilot signal resources for the terminal device.

20. The method according to claim 13, wherein

   the codeword information, the **RI** and the CQI are sent to the network device as the CSI feedback information via one reporting process; or
   the codeword information is sent to the network device as the CSI feedback information via one reporting process, and the RI and the CQI are sent to the network device as the CSI feedback information via another reporting process; or
   the codeword information and the RI are sent to the network device as the CSI feedback information via one reporting process, and the CQI is sent to the network device as the CSI feedback information via another reporting process; or
   the codeword information and the CQI are sent to the network device as the CSI feedback information via one reporting process; or
   the codeword information is sent to the network device as the CSI feedback information via one reporting process, and the CQI is sent to the network device as the CSI feedback information via another reporting process; or
   the codeword information is reported to the network device as the CSI feedback information, and the CSI feedback information further comprises at least one of interference information between cells or interference information between terminals.

21. The method according to any one of claims 13 to 20, wherein the downlink pilot signal is a channel state information reference signal (CSI-RS).

22. The method according to any one of claims 13 to 21, wherein the codeword information is reported to the network device in a broadband manner.

23. The method according to any one of claims 13 to 22, wherein the RI is reported to the network device in the broadband manner, and the CQI is reported to the network device in the broadband manner or a sub-band manner.

24. An apparatus for data transmission, comprising:

   a receiving module configured to receive a downlink pilot signal sent by a network device;
   a processing module configured to obtain codeword information by encoding and compressing, via an artificial intelligence/machine learning (AI/ML) model, downlink information obtained by estimation based on the downlink pilot signal; and determine channel state information (CSI) of a downlink channel, wherein the CSI comprises a rank indication (RI) and/or a channel quality indication (CQI); and
   a sending module configured to report CSI feedback information to the network device, wherein the CSI feedback information comprises at least one of the codeword information or the CSI.

25. An apparatus for data transmission, comprising:

   a sending module configured to send a downlink pilot signal to a terminal device;
   a receiving module configured to receive channel state information (CSI) feedback information reported by the terminal device, wherein the CSI feedback information comprises at least one of codeword information or a CSI of a downlink channel, the codeword information is obtained by the terminal device by encoding and compressing, via an artificial intelligence/machine learning (AI/ML) model, downlink information obtained by estimation based on the downlink pilot signal, and the CSI comprises a rank indication (RI) and/or a channel quality indication (CQI); and
   a processing module configured to transmit downlink data on the downlink channel according to the CSI feedback information.

26. A terminal device, comprising:

   a processor; and
   a memory having stored therein a computer program,
   wherein the processor executes the computer program to implement the method according to any one of claims 1 to 12.

27. A network device, comprising:

a processor; and
a memory having stored therein a computer program,
wherein the processor executes the computer program to implement the method according to any one of claims 13 to 23.

28. A computer-readable storage medium, having stored therein a computer program that, when executed by a processor, causes the method according to any one of claims 1 to 12 or the method according to any one of claims 13 to 23 to be implemented.

29. A communication system, comprising a terminal device and a network device, wherein the terminal device is configured to implement the method according to any one of claims 1 to 12, and the network device is configured to implement the method according to any one of claims 13 to 23.

network architecture 100

core
network

30

30

access
network

20

20

10

FIG. 1

terminal device

downlink
information

encoder

codeword
information
(such as binary
bit stream)

network device

decoder

recovered
downlink
information

FIG. 2

terminal device                                                                  network device

310, a downlink pilot signal

320, obtaining codeword information by encoding and compressing, via an AI/ML model, downlink information obtained by estimation based on the downlink pilot signal

330, determining CSI of a downlink channel, in which the CSI includes an RI and/or a CQI

340, CSI feedback information, including at least one of the codeword information or the CSI

350, transmitting downlink data on the downlink channel according to the CSI feedback information

FIG. 3

terminal device                                                                  network device

410, a downlink pilot signal

420, obtaining codeword information by encoding and compressing, via an AI/ML model for encoding, downlink information obtained by estimation based on the downlink pilot signal

430, determining, according to a codeword length of the codeword information, a codebook parameter corresponding to the codeword length of the codeword information in a codebook

440, determining an RI and a CQI according to the codebook parameter and downlink channel information

450, the codeword information, the RI and the CQI

460, obtaining recovered downlink information by decoding the codeword information via the AI/ML model for decoding, and determining a precoding matrix used for transmitting downlink data on a downlink channel according to the recovered downlink information

470, transmitting the downlink data on the downlink channel according to the precoding matrix, the RI and the CQI

FIG. 4

terminal
device

network
device

510, a downlink pilot signal

520, obtaining codeword information by encoding
and compressing, via an AI/ML model for
encoding, downlink information obtained by
estimation based on the downlink pilot signal

530, the codeword information

540, obtaining recovered downlink information
by decoding the codeword information via the AI/
ML model for decoding, and determining v
feature vectors contained in a precoding matrix
determined based on the recovered downlink
information

550, a downlink pilot signal formed by v beams, in
which the v beams are the above v feature vectors

560, determining an RI and a CQI by effective
channel information estimated based on the
downlink pilot signal formed by the v beams

570, the RI and the CQI

580, transmitting downlink data on a downlink
channel according to a precoding matrix
determined based on downlink information
recovered by decoding, and the RI and the CQI
reported by the terminal device

FIG. 5

600

610

receiving
module

620

processing
module

630

sending
module

FIG. 6

```
                    ┌────────────────────────────────┐
                    │                           700   │
                    │   ┌──────────────┐  720         │
                    │   │  receiving   │              │
                    │   │   module     │              │
                    │   ├──────────────┤  730         │
                    │   │ processing   │              │
                    │   │   module     │              │
                    │   ├──────────────┤  710         │
                    │   │  sending     │              │
                    │   │   module     │              │
                    │   └──────────────┘              │
                    └────────────────────────────────┘
```

FIG. 7

```
  800    ┌────────────┐ 801        ┌─────────────┐ 803
         │ processor  │            │ transmitter │           805
         └────────────┘            └─────────────┘
    ◄═══════════════════════ bus ═══════════════════════►
         ┌────────────┐ 802        ┌─────────────┐ 804
         │  receiver  │            │   memory    │
         └────────────┘            └─────────────┘
```

FIG. 8

## INTERNATIONAL SEARCH REPORT

| International application No. |
|---|
| **PCT/CN2022/110375** |

| | |
|---|---|
| **A.** | **CLASSIFICATION OF SUBJECT MATTER** |
| | H04W24/10(2009.01)i |

According to International Patent Classification (IPC) or to both national classification and IPC

| | |
|---|---|
| **B.** | **FIELDS SEARCHED** |

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNTXT, ENTXT, VEN, 3GPP, CNKI, IEEE: 信道状态信息, 导频信号, 参考信号, 人工智能, 机器学习, 编码, 解码, 码字, 码本, 秩指示, 信道质量指示, 反馈, 预编码矩阵, CSI, reference signal, RS, Artificial intelligence, AI, machine learning, ML, encode, decode, codeword, codebook, RI, CQI, PMI

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | LENOVO. "Further aspects of AI/ML for CSI feedback" <br> *3GPP TSG RAN WG1 #109-e R1-2204418*, 2022-04-29 (2022-04-29), <br> sections 2-5 | 1-29 |
| X | XIAOMI. "Discussion on AI for CSI feedback enhancement" <br> *3GPP TSG RAN WG1 #109-e R1-2203809*, 2022-04-29 (2022-04-29), <br> sections 2-3 | 1-29 |
| A | CN 114614955 A (HUAWEI TECHNOLOGIES CO., LTD.) 2022-06-10 (2022-06-10) <br> entire document | 1-29 |
| A | CN 114747250 A (NOKIA SHANGHAI BELL CO., LTD. et al.) 2022-07-12 (2022-07-12) <br> entire document | 1-29 |
| A | US 2021195462 A1 (QUALCOMM INC.) 2021-06-24 (2021-06-24) <br> entire document | 1-29 |
| A | US 2021351885 A1 (SAMSUNG ELECTRONICS CO., LTD.) 2021-11-11 (2021-11-11) <br> entire document | 1-29 |

☑ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **04 April 2023** | **17 April 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

| International application No. |
|---|
| **PCT/CN2022/110375** |

**C.     DOCUMENTS CONSIDERED TO BE RELEVANT**

| Category* | Citation of document, with indication, where appropriate, of the relevant passages | Relevant to claim No. |
|---|---|---|
| A | US 2022052827 A1 (QUALCOMM INC.) 2022-02-17 (2022-02-17)<br>       entire document | 1-29 |

Form PCT/ISA/210 (second sheet) (July 2022)

## INTERNATIONAL SEARCH REPORT
### Information on patent family members

International application No.

**PCT/CN2022/110375**

| Patent document cited in search report | | | Publication date (day/month/year) | Patent family member(s) | | | Publication date (day/month/year) |
|---|---|---|---|---|---|---|---|
| CN | 114614955 | A | 10 June 2022 | WO | 2022121797 | A1 | 16 June 2022 |
| CN | 114747250 | A | 12 July 2022 | WO | 2021102917 | A1 | 03 June 2021 |
| US | 2021195462 | A1 | 24 June 2021 | None | | | |
| US | 2021351885 | A1 | 11 November 2021 | WO | 2020213964 | A1 | 22 October 2020 |
| | | | | IN | 201941015348 | A | 23 October 2020 |
| US | 2022052827 | A1 | 17 February 2022 | WO | 2022035684 | A1 | 17 February 2022 |
| | | | | IN | 202227072419 | A | 27 January 2023 |

Form PCT/ISA/210 (patent family annex) (July 2022)